Europäisches Patentamt

European Patent Office

Office européen des brevets

(19)

(11) Veröffentlichungsnummer: **0 077 847**
**A1**

(12) # EUROPÄISCHE PATENTANMELDUNG

(21) Anmeldenummer: **81109079.4**

(22) Anmeldetag: **28.10.81**

(51) Int. Cl.³: **B 29 F 1/06**

(43) Veröffentlichungstag der Anmeldung:
**04.05.83 Patentblatt 83/18**

(84) Benannte Vertragsstaaten:
**AT CH DE FR GB IT LI NL SE**

(71) Anmelder: **Ditter, Rolf**
**Beethovenstrasse 9**
**D-7612 Haslach i.K.(DE)**

(72) Erfinder: **Ditter, Rolf**
**Beethovenstrasse 9**
**D-7612 Haslach i.K.(DE)**

(72) Erfinder: **Rosenbusch, Alfred**
**Steinacherstrasse 7**
**D-7612 Haslach i.K.(DE)**

(72) Erfinder: **Thoma, Friedrich Xaver**
**Leimengrubweg 12**
**D-7612 Haslach i.K.(DE)**

(74) Vertreter: **Thoma, Friedrich Xaver**
**Leimengrubweg 12**
**D-7612 Haslach i.K.(DE)**

(54) **Spritzgiesseinrichtung für Spritzgiessmaschinen und/oder Spritzgiesswerkzeuge.**

(57) Diese Spritzgießeinrichtung mit einer Spritzeinheit (2,3), die mit einem, über ein hydraulisches Servoventil (36), regelbaren Spritzdruckzylinder (13,14) versehen ist, der, insbesondere forminnendruckabhängig, über eine elektronische Zentraleinheit (33) gesteuert ist, ist räumlich zwischen der Spritzeinheit (7) einer Spritzgießmaschine (31) und einem Spritzgießwerkzeug (15) angeordnet.

Damit ist es möglich geworden, derartige Einrichtungen, insbesondere bei Spritzgießwerkzeugen (15) mit mehreren Formnestern (4, 5), einzeln für jedes Formnest (4, 5) vorzusehen und mittelbar über eine elektronische Zentraleinheit (33), insbesondere analog, ein hydraulisches Servoventil (36), das jeder Spritzeinheit (2, 3) je Formnest (4, 5) zugeordnet ist, forminnendruckabhängig, insbesondere im Nachdruck, zu regeln.

Fig. 2

EP 0 077 847 A1

**Spritzgießeinrichtung für Spritzgießmaschinen und/oder Spritzgießwerkzeuge.**

Die Erfindung bezieht sich auf eine Spritzgießeinrichtung mit einem
regelbaren Spritzdruckzylinder für Spritzgießmaschinen und/oder
Spritzgießwerkzeuge.

Eng tolerierte Spritzgußteile aus Kunststoffen lassen sich mit den
bekannten Spritzgießmaschinen, bei denen der Formfüllvorgang weg-
und zeitabhängig gesteuert wird, nur nach sorgfältigem Einrichten
und bei gleichbleibenden Betriebsbedingungen gleichbleibend herstellen. Insbesondere beim Auftreten von dort vielfach nicht vermeidbarer
kleinster Störgrößen, wie der Änderung der Maschinendaten (Öltemperaturschwankungen, Schneckenverschleiß, u.s.w.) und von Materialänderungen (anderes Einzugs-, Aufschmelz- und Verdichtungsverhalten eines
Kunststoffes) ergeben sich andere Werte für den Forminnendruck und damit für die Qualität eines Spritzgußteiles.

Bekanntlich liefert der direkt im Formnest eines Spritzgießwerkzeuges gemessene Forminnendruckverlauf während der Formbildung d.h. des
Einspritzvorganges entscheidende Informationen -bestimmend für Gewicht
und Maßhaltigkeit eines Spritzgußteiles- für die Produktqualität und
Langzeitkonstanz. Nur durch die direkte Messung am Spritzgußteil während der Formteilbildung, durch Messen der wichtigsten Verarbeitungsgrößen und -bei Nichteinhaltung dieser Größen- einem Ausregeln noch
während des laufenden Spritzzyklusses, können komplizierte Kunststoffspritzgußteile mit hoher und gleichbleibender Qualität produziert werden.

So ist es bekannt, durch Messen der wichtigsten Verfahrensgrößen an
einer Spritzgießmaschine, wie der Schneckenvorlaufgeschwindigkeit,
des Forminnendruckes und des Hydraulikdruckes, sowie dem Regeln dieser Größen in geschlossenen Regelkreisen, die bei den vorher genannten Verfahren auftretenden Einflüsse zu eliminieren. Dies wird insbesondere dadurch erzielt, daß während des Formfüllvorganges insbesondere durch ein hydraulisches, rasch arbeitendes, Durchflußservoventil, Druck und Geschwindigkeit in einem geschlossenen Regelkreis ausgeregelt werden.

Durch eine derartige, forminnendruckabhängige Umschaltung von Spritzdruck auf Nachdruck und die exakte Regelung dieser Drücke, werden relativ gleichmäßige Forminnendruckkurven für jedes Spritzgußteil erzielt. Zusammen mit einer konstanten Form- und Massentemperatur werden ein konstantes Gewicht, kleine Meßtoleranzen und geringer Verzug für ein Spritzgußteil erreicht.

Außerdem kann durch die dort erzielbaren geringen Steuungen der Forminnendruck niedriger gewählt werden, ohne zu befürchten, daß das Formnest nicht richtig gefüllt wird. Diese niedrigeren Forminnendrücke erlauben niedrigere Schließkräfte und damit leichtere Konstruktionen für Spritzgußwerkzeuge und -maschinen.

Diese vorgenannten Erkenntnisse wurden inzwischen bei sogenannten geregelten Spritzgießmaschinen realisiert (Netztal-Sycap, -Markenname-).

Darüberhinaus ist ein sogenannter Umrüstblock für Spritzgußmaschinen bekanntgeworden, mit dem einfache, zeit-weg-geregelte, Spritzgußmaschinen zu einer geschlossen geregelten Maschine umgerüstet werden können. Der dort für die Umrüstung vorgesehene Hydraulikblock mit einem geschlossen regelbaren Servo- oder Proportionalventil, einem Hochdruckfilter, Druckgebern und sonstigem Zubehör werden mittelbar in die vorhandene Spritzgießmaschine eingebaut (Philips, Eindhofen -Markenname-).

Derartige vollgeregelte Spritzgußmaschinen oder über Umrüstblöcke ge-schlossen geregelte Spritzgußmaschinen erzielten gegenüber den einfa-chen weg-zeit-abhängig geregelten Spritzgießmaschinen einen erheblichen Fortschritt zur Herstellung von Spritzgußteilen mit hoher und gleichbleibender Qualität. Diese Qualität kann sich jedoch immer nur auf ein Spritzgußteil aus einem Spritzgußwerkzeug mit nur einem Formnest beziehen. Sind mehrere Formnester in einem Spritzgußwerkzeug enthal-

- 3 -          0077847

ten, dann kann bei einer nicht optimalen Anlage der Angußkanäle aus dem zentralen Anguß einer Spritzdüse einer Spritzgießmaschine zu den einzelnen Formnestern in einem Spritzgießwerkzeug ein nicht unwesentlicher Qualitätsunterschied der Spritzgußteile aus den einzelnen Formnestern zueinander entstehen.

Der Erfindung liegt die Aufgabe zugrunde, eine Spritzgießeinrichtung mit einem regelbaren Spritzdruckzylinder zu schaffen, der die vorteilhaften Merkmale der bekannten, geschlossen oder voll geregelten, zuvor beschriebenen Spritzgießmaschinen oder entsprechender Umrüstsätze für Spritzgießmaschinen, besitzt, die jedoch technisch einfach und übersichtlich aufgebaut und zweckmäßig handhabbar ist, und mit der eine Spritzgießmaschine und/oder ein Spritzgießwerkzeug ausgestattet werden kann. Dabei soll sichergestellt sein, daß mit dieser Einrichtung die bisher bekannten, teils schwer lösbaren Probleme bei einem qualitätsbewußten Spritzgießen mit Spritzgießwerkzeugen, die mehr als ein Formnest aufweisen, wirtschaftlich und mit hoher Qualität, bei optimaler Gewichts-und Meßtoleranz der einzelnen Spritzgußteile aus den verschiedenen Formnestern, beseitigt werden können.

Diese Aufgabe wird erfindungsgemäß dadurch gelöst, daß die Spritzgießeinrichtung mit mindestens einer Spritzdüse und mindestens einem regelbaren Spritzdruckzylinder räumlich zwischen der Spritzeinheit einer Spritzgießmaschine und einem Spritzgießwerkzeug angeordnet ist.

In Weiterbildung der Erfindung ist es vorgesehen, daß jedes einzelne Formnest in einem Spritzgießwerkzeug mit mehr als einem Formnest über eine regelbare Spritzgießeinrichtung, gemäß der Erfindung, angegossen wird, wobei dort die einzelnen erfindungsgemäßen Spritzgießeinrichtungen von der zentralen Spritzgießeinheit der Spritzgießmaschine über einen entsprechenden Verteiler mit vorplastifizierter Spritzgießmasse versorgt werden.

Jede einzelne, einem Formnest zugeordnete Spritzgießeinrichtung ist für sich regelbar. Die Regelung des Druckes, insbesondere des Nach-

- 4 -                               0077847

druckes, kann dort über einen, dem jeweiligen Formnest zugeordneten, Forminnendruckaufnehmer erfolgen. Außerdem kann dort die Form- und insbesondere die Massetemperatur der jeweiligen Spritzgießeinrichtung, unabhängig von den anderen noch vorgesehenen Spritzgießeinrichtungen, einzeln geregelt werden.

Es ist desweiteren vorgesehen, daß derartige, adapterähnliche, Spritzgießeinrichtungen, entsprechend der Anzahl der, in einem Spritzgießwerkzeug vorgesehenen, Formnester, bündelartig vor dem Hauptspritzgießzylinder einer Spritzgießmaschine angeordnet sind und, wie bereits oben erwähnt, über einen Verteiler mit vorplastifizierter Spritzgießmasse versorgt werden. Dabei können diese Spritzgießeinrichtungen mit dem Hauptspritzgießzylinder kraftschlüssig, insbesondere lösbar, verbunden sein und mit diesem, wegabhängig geregelt, verfahrbar sein.

Es ist jedoch auch vorgesehen, daß derartige Spritzgießeinrichtungen, über dem jeweiligen Formnest, auf einem Spritzgießwerkzeug, kraftschlüssig lösbar, angeordnet sind. In diesem Falle kommt der Hauptspritzgießzylinder mit seiner Spritzdüse mit einer entsprechenden Angußbuchse an einem Verteiler der Spritzgießeinrichtungen in Eingriff.

Vorteilhaft bei dieser Art von Spritzgießeinrichtungen ist nicht nur, daß diese individuell, den Erfordernissen entsprechend, an eine Spritzgießmaschine und/oder an ein Spritzgießwerkzeug angebaut werden können, wobei die Regelung über einen von der Spritzgießmaschine unabhängigen, oder von dieser abhängigen Hydraulik-/Elektronikblock erfolgen kann, sondern auch, daß mit dieser Einrichtung, die räumlich relativ klein und kompakt aufgebaut ist, bei Spritzgießwerkzeugen mit mehr als einem Formnest, jedes Formnest, individuell forminnendruckabhängig regelbar, angespritzt werden kann und somit Druck- und Füllunterschiede der einzelnen Formnester zueinander eliminiert werden können. Vorteilhaft ist ferner die hohe Wirtschaftlichkeit dieser Einrichtung und die einfache Angußgestaltung für die einzelnen Formnester an einem Spritzgießwerkzeug.

Im folgenden wird die Erfindung anhand von Ausführungsbeispielen, die in den Zeichnungen dargestellt sind, näher erläutert. Es zeigen

Figur 1 eine Schnittansicht durch eine zweifach ausgelegte Spritzgießeinrichtung nach der Erfindung, die nur mit ihren wesentlichsten
Funktionselementen dargestellt, auf einem Spritzgießwerkzeug mit zwei
Formnestern angeordnet ist.

Figur 2 ein Blockschaltbild der geregelten Spritzgießeinrichtung
nach der Erfindung.

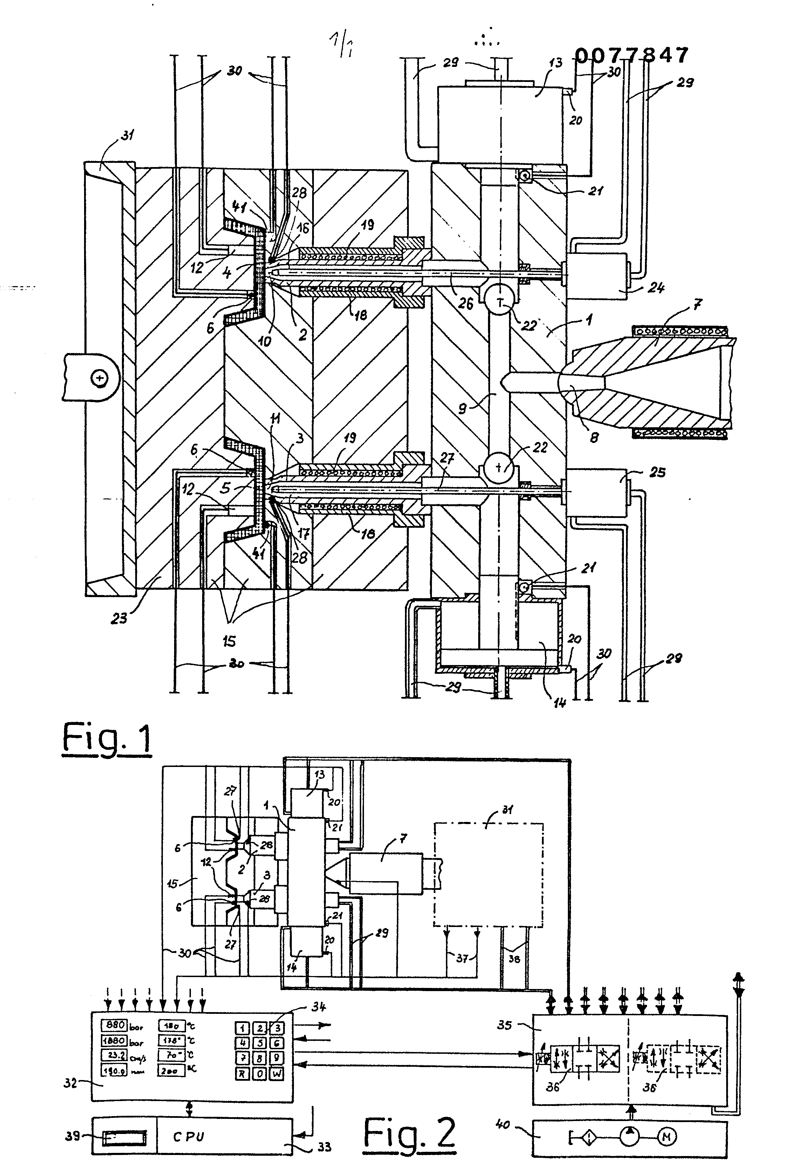

Die in der Figur 1 gezeigte Einrichtung besteht im einzelnen aus einem verteilerartigen Gehäuse 1, insbesondere zur Aufnahme der vorgesehenen beiden Spritzeinheiten 2 und 3, die den beiden Formnestern
4 und 5 in einem Spritzgießwerkzeug benachbart angeordnet sind. Die
Einrichtung wird aus einer zentralen Spritzgießeinheit 7, einer nicht
näher gezeigten Spritzgießmaschine mit vorplastifizierter Spritzgießmasse versorgt. Diese Spritzgießmasse verteilt sich nach dem Austritt
aus der Düse 8 der Spritzgießeinheit 7 und dem Eintritt in das Gehäuse 1 über einen dort vorgesehenen Verteilerkanal 9, durch die beiden
Spritzeinheiten 2 und 3 mit den Düsen 10 und 11 in die Formnester 4
und 5.

Die dortigen beiden Formfüllvorgänge der Formnester 4 und 5 sind dabei, jeweils getrennt, Forminnendruckabhängig regelbar. In den Formnestern vorgesehene Forminnendruckaufnehmer 12 steuern, nach Erreichen des jeweiligen Forminnendrucksollwertes, die jeweilige Umschaltung der Spritzdruckregelung auf eine Nachdruckregelung. Dabei wird
der Spritzdruck zweckmäßigerweise insbesondere noch von der Spritzgießmaschine vorgegeben. Der Nachdruck jedoch wird von den jeweils
dem Formnest 4, 5 vorgeschalteten, an der Einrichtung hierfür vorgesehenen Druckzylindern 13, 14 erzeugt. D.h. gemäß der Erfindung ist
jedem Formnest 4, 5 in einem Spritzgießwerkzeug 15, insbesondere zur
Nachdruckregelung ein Druckzylinder 13, 14 zugeordnet. Die Regelung
eines jeden Druckzylinders 13, 14 erfolgt über ein eigenes Servoventil, wie dies in der folgenden Figur näher gezeigt ist, und die insbesondere forminnendruckabhängig gesteuert werden.

Der Verteilerkanal 9 und Vorkammern 16 und 17 im Bereich der Düsen 10 und 11 der Spritzeinheiten 2 und 3 sind geheizt, damit dort die Spritzgießmasse dauernd fließbar bleibt. Es handelt sich hier um sogenannte Heißkanäle. 19 bezeichnet jeweils Heizbänder, die zu diesem Zwecke den Vorkammern ummantelnd benachbart sind. 18 kann dort eine Wärmeisolation bezeichnen, die den Heißkanal vom Gesenkteil 23 des Spritzgießwerkzeuges 15 und dem Gehäuse 1 trennt.

Zur Regelung des Spritzdruckes, insbesondere des Nachdruckes, mittels des vorgesehenen Druckzylinders 13, 14, sind am Druckzylinder 13, 14 Hydraulikdruckaufnehmer 20 und Wegaufnehmer 21 angeordnet. 22 bezeichnet dort sogenannte Massenrückflußschließventile, die, selbsttätig arbeitend, dazu vorgesehen sind, insbesondere in der Nachdruckphase den Massenstrom aus dem Verteilerkanal 9 am Rückfluß zur Düse 9 hin zu hindern.

Die erfindungsgemäße Einrichtung kann insbesondere kraftschlüssig mit einem Teil des Spritzgießwerkzeuges 15, insbesondere lösbar verbunden sein. Das Gehäuse 1 kann dabei als Werkzeugspannplatte ausgebildet sein.

Es liegt im Rahmen der Erfindung, daß an Stelle des gezeichneten Druckzylinders 13, 14 auch eine sogenannte Schneckenkolbenspritzgießeinheit treten kann, die dort an jedem Formnest 4, 5 vorgesehen sein kann und die jeweils unabhängig voneinander formnestinnendruckabhängig geregelt wird. Der Eintritt der vorplastifizierten Spritzgußmasse kann dort dann im Schneckenkolbenbereich erfolgen.

Wie die Figur 1 weiter zeigt, sind dort die beiden Heißkanalspritzeinheiten 2, 3 mit sogenannten Heißkanalnadelverschlußdüsen 10, 11 ausgestattet, bei denen die Nadeln 26, 27 über entsprechende Druckzylinder 24, 25 betätigt werden.

Der Aufbau und die räumliche Anordnung der einzelnen Funktionselemente, insbesondere der Druckzylinder 13, 14 ist bei dem gezeigten Ausführungsbeispiel beliebig gewählt. Es kann demnach jede zweckmässige oder erforderliche Ausführungs- oder Aufbauart gewählt werden. So ist insbesondere daran gedacht, derartige Einrichtungen mittelbar als Modul oder Baugruppe in Adapterform herzustellen, die dann auf entsprechend bemessenen Spritzgießwerkzeugen angeordnet werden. Derartige Einrichtungen können jedoch auch unmittelbar in entsprechend entworfene Spritzgießwerkzeuge integriert werden. Die Regelung für eine derartige Einrichtung kann dort unabhängig, bis auf einige Steuergrößen, von der Mutterspritzgießmaschine aufgebaut sein und arbeiten. Es ist jedoch auch vorgesehen, zumindest den Hydraulikantrieb der Mutterspritzgießmaschine zu nutzen. Dabei kann diese geschlossen geregelt oder einfach weg- zeitabhängig geregelt sein.

Die vorliegende erfindungsgemäße Einrichtung ermöglicht über das genannte Heißkanalangußverfahren hinaus auch jede andere Angußform, sofern dafür gesorgt wird, daß eine etwaig vorgesehene Vorkammer durch Luftspalte gegen das gefüllte Spritzgießwerkzeug isoliert wird, sodaß der Pfropfen in der Vorkammer eine plastische Seele behält.

Für die Regelung der Werkzeugtemperaturen können sowohl auf der beweglichen Seite als auch auf der festen Seite des Spritzgießwerkzeuges 15 Temperaturfühler vorgesehen sein, die in der Figur 1 mit den Ziffern 6 und 41 bezeichnet sind. Außerdem kann jeweils ein Temperaturfühler im Düsenbereich der Düsen 10 und 11 für die Temperaturüberwachung der Spritzgießmasse vorgesen sein. Diese Fühler sind mit der Ziffer 28 bezeichnet. 29 kennzeichnet hydraulische Steuerleitungen, die mit einem, in dieser Figur nicht näher dargestellten, Hydraulik-steuer-und-regelungsblock verbunden sind, der wiederum mit einer elektronischen Rechen- und Steuerwerk, einer sogenannten elektronischen Zentraleinheit oder Mikroprozessor zusammenarbeitet, der in der folgenden Figur näher beschrieben ist. 30 zeigt elektrische Signalleitungen und 31 eine bewegliche Aufspannplatte für den Gesenkteil 23 des Spritzgießwerkzeuges 15.

An Stelle der gezeigten zweifach ausgelegten Spritzgießeinrichtung kann natürlich jede andere Mehrfachausführung an Formnestern mit der erfindungsgemäßen Einrichtung ausgestattet werden. Es ist natürlich, daß diese Einrichtung auch bei Einfach-Spritzgießwerkzeugen eingesetzt werden kann, insbesondere wenn dieses mit nur einem Formnest, auf einer Spritzgießmaschine älterer Bauart und ohne geschlossenem Regelkreis zum Einsatz kommen soll.

Das, in der Figur 2 dargestellte, Blockschaltbild für die elektronische und hydraulische Regelung der erfindungsgemäßen Spritzgießeinrichtung zeigt zunächst auf der Spritzgießeinheit-/-werkzeugseite im wesentlichen die strichpunktiert angedeutete Mutterspritzgießmaschine 31 mit der Spritzgießeinheit 7 im Eingriff mit dem Verteiler-Gehäuse 1 für die beiden Spritzeinheiten 2 und 3 auf dem Spritzgießwerkzeug 15. 12 zeigt die Forminnendruckaufnehmer, 6 die Temperaturfühler auf der werkzeugbeweglichen Seite und 41 die Temperaturfühler auf der werkzeugfesten Seite. Die Temperaturfühler im Bereich der Düsen der Spritzeinheiten 2, 3 sind mit 28 gekennzeichnet. Die Meßwerte, insbesondere dieser Eingabegeräte werden einer freiprogrammierbaren elektronischen Steuerung 32, die mit einer Zentraleinheit (CPU) 33, einem Mikroprozessor ausgestattet ist, zugeführt. Diese Zentraleinheit 33 vergleicht die Spritzgießsituation an der Maschine, wie sie sich über die an der Tastatur 34 eingegebenen Daten darstellt, mit den im Programmspeicher der Zentraleinheit 33 festgelegten Schema und steuert demnach die entsprechenden Ausgangsstufen, insbesondere über einen Hydraulikblock 35. Dort ist ein sogenanntes Durchflußservoventil 36 für je eine Spritzeinheit 2, 3 vorgesehen. Dieses Ventil 36 wird über die Kolbenvorlaufgeschwindigkeit der Druckzylinder 13, 14 mittels der Wegaunehmer 21, des Hydraulikdrucks in dem Druckzylinder 13, 14 mittels der Hydraulikdruckaufnehmer 20 und dem Forminnendruck mittels der Forminnendruckaufnehmer 12 in einem geschlossenen Regelkreis analog geregelt.

Insbesondere kann dort die Regelung derart erfolgen, daß der Spritzdruck, der von der Mutterspritzgießmaschine 31 erzeugt wird, forminnendruckabhängig auf den Nachdruck umgeschaltet wird, der vom Druckzylinder 13, 14 erzeugt wird. Zu diesem Zwecke kann auch die Mutterspritzgießmaschine 31 mit Eingabe- und Ausgabegeräten für die Steuerung 32 und die Zentraleinheit 33 versehen sein, die über einen zentralen Datenbus oder über spezielle Ein-, Ausgänge 37, 38 angeschlossen werden können.

Die Eingabe der Daten in den Programmspeicher der Zentraleinheit 33 kann sowohl manuell über die Tastatur 34, als auch über einen Datenträger, eine Diskette oder ein Magnetband oder eine Lochkarte / Lochstreifen erfolgen. Zu diesem Zweck ist die Zentraleinheit 33 mit einem Aufzeichnungs-/Wiedergabeeinrichtung 39 ausgestattet.

An der elektronischen Steuerung 32 können alle einzugebenden, oder im Programmspeicher abgelegten Daten insbesondere digital angezeigt werden. Dies bezieht sich auf die messbaren Drücke, Wege, Geschwindigkeiten und Temperaturen.

Der vorgesehene Hydraulikblock 35 kann durch eine eigene Ölpumpe 40 oder von der Mutterspritzgießmaschine 31 versorgt werden. Entsprechende Eingabe- / Ausgabeanschlüsse sind vorgesehen. Der Hydraulikblock 35 ist derart ausgelegt, daß er beliebig, den Erfordernissen entspechend, für den Anschluß mehrerer Spritzeinheiten 2, 3 erweitert werden kann.

In gleicher Weise ist die elektronische Steuerung 32 für den Anschluß und die Steuerung mehrerer Spritzeinheiten 2, 3 eingerichtet. Entsprechende Schnittstellen für Ein- und Ausgabegeräte, sowie für Dialoggeräte, Peripheriegeräte und Datensichtstationen sind vorgesehen.

Patentansprüche

1. Spritzgießeinrichtung mit einem regelbaren Spritzdruckzylinder
(13, 14) für Spritzgießmaschinen (31) und/oder Spritzgießwerkzeuge (15), dadurch gekennzeichnet, daß die Spritzgießeinrichtung mit mindestens einer Spritzeinheit (2, 3), mit mindestens
einer Spritzdüse (10, 11) und mit mindestens einem regelbaren
Spritzdruckzylinder (13, 14), räumlich zwischen der Spritzeinheit (7) einer Spritzgießmaschine (31) und einem Spritzgießwerkzeug (15) angeordnet ist.

2. Spritzgießeinrichtung nach Patentanspruch 1, dadurch gekennzeichnet, daß bei einem Spritzgießwerkzeug (15) mit mehreren Formnestern (4, 5), jedem Formnest (4, 5) eine Spritzgießeinrichtung mit
einer Spritzeinheit (2, 3) mit Spritzdüse (10, 11) und regelbarem
Spritzdruckzylinder (13, 14) zugeordnet ist.

3. Spritzgießeinrichtung nach Patentanspruch 1 und 2, dadurch gekennzeichnet, daß die Spritzgießeinrichtungen mit den Spritzeinheiten
(2, 3) über einen Verteiler mit Verteilerkanälen (9) in einem Gehäuse (1) miteinander gekoppelt sind.

4. Spritzgießeinrichtung nach Patentanspruch 1 bis 3, dadurch gekennzeichnet, daß der Spritzdruckzylinder (13, 14) im Bereich eines
Verteilerkanals (9) wirkend am Gehäuse (1) angeordnet ist, und daß
im Verteilerkanal (9) je Spritzeinheit (2, 3) ein Massenrückflußschließventil (22) vorgesehen ist.

5. Spritzgießeinrichtung nach Patentanspruch 1 bis 4, dadurch gekennzeichnet, daß der Spritzdruckzylinder (13, 14) über ein hydraulisches Servoventil (36) in einem geschlossenen Regelkreis forminnendruckabhängig geregelt ist.

6. Spritzgießeinrichtung nach Patentanspruch 5, dadurch gekennzeichnet,
daß jedem Spritzdruckzylinder (13, 14) bei einer Mehrfachanordnung
ein eigenes Servoventil (36) zugeordnet ist.

7. Spritzgießeinrichtung nach Patentanspruch 1 bis 6, dadurch gekennzeichnet, daß die Spritzgießeinrichtung mit einer Spritzeinheit (2, 3) und einem Spritzdruckzylinder (13, 14) als Modul oder Adapter ausgebildet ist, und daß die Spritzgießeinrichtung insbesondere auf einem Spritzgießwerkzeug (15) kraftschlüssig lösbar befestigt, oder mit diesem integriert sein kann.

8. Spritzgießeinrichtung nach Patentanspruch 1 bis 7, dadurch gekennzeichnet, daß die Spritzeinheit (2, 3) als Heißkanalsystem ausgebildet ist.

9. Spritzgießeinrichtung nach Patentanspruch 1 bis 8, dadurch gekennzeichnet, daß der Spritzeinheit (2, 3) vorplastifizierte Spritzgießmasse aus einer zentralen Spritzgießeinheit (7) einer Spritzgießmaschine (31) zugeführt ist, und daß der Spritzdruckzylinder (13, 14) insbesondere zur Bildung des forminnendruckabhängig geregelten Nachdrucks vorgesehen ist.

10. Spritzgießeinrichtung nach Patentanspruch 1 bis 9, dadurch gekennzeichnet, daß die Spritzgießeinrichtung mit der Spritzeinheit (2, 3) und dem Spritzdruckzylinder (13, 14) und weitere erforderliche aktive Funktionelemente, insbesondere analog, über eine elektronische Steuerung (32), insbesondere mit einer Zentraleinheit (33), die mit Anschlußeinrichtungen für zusätzliche Spritzgießeinrichtungen und für Eingabe, bzw. Ausgabegeräte einer Spritzgießmaschine (31) ausgestattet ist, gesteuert ist.

Fig. 1

Fig. 2

| Europäisches Patentamt | **EUROPÄISCHER RECHERCHENBERICHT** | |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | GB-A-2 046 166 (INCOE CORP.) <br><br> * Seite 1, Zeile 122 - Seite 2, Zeile 30; Figur 1 * & DE - A - 2 940 044 <br><br> --- | 1-3,7-9 | B 29 F 1/06 |
| Y | GB-A- 976 369 (SHELL INTERNATIONALE RESEARCH MIJ.) <br> * Seite 3, Zeilen 39-119; Figur * <br><br> --- | 1-4,7 | |
| Y | WO-A-8 000 814 (J. KUBAT) <br><br> * Seite 5, Zeile 35 - Seite 8, Zeile 32; Figuren 4,6-11 * <br><br> --- | 1,4,5,9 | |
| Y | DE-B-1 196 855 (R.H. WINDSOR) <br> * Spalte 4, Zeilen 28-44; Figuren 2,3 * <br><br> --- | 1,4 | |
| | | | RECHERCHIERTE SACHGEBIETE (Int. Cl. ³) |
| Y | FR-A-2 325 490 (CREUSOT-LOIRE) <br> * Seite 3, Zeile 29 - Seite 4, Zeile 12; Figur 1 * & DE - A - 2 639 155 <br><br> ----- | 1,4 | B 29 F |

Der vorliegende Recherchenbericht wurde für alle Patentansprüche erstellt.

| Recherchenort <br> DEN HAAG | Abschlußdatum der Recherche <br> 28-06-1982 | Prüfer <br> BOLLEN J.A.G. |
|---|---|---|